# EUROPEAN PATENT APPLICATION

(11) **EP 4 748 667 A1**
(43) Date of publication of application: **27.05.2026**
(21) Application number: 24853284.8
(22) Date of filing: 20.05.2024
(51) Int. Cl.: B60T 13/74, B60T 17/22, B60T 17/00

(54) **ELECTRO-MECHANICAL BRAKE DEVICE HAVING RING-SHAPED PRESSURE SENSOR, AND VEHICLE**

(30) Priority: 14.08.2023 CN 202311020271
(71) Applicant: Huawei Digital Power Technologies Co., Ltd., Shenzhen, Guangdong 518043 (CN)
(72) Inventor: LUO, Yuehao, Shenzhen, Guangdong 518043 (CN); NI, Hui, Shenzhen, Guangdong 518043 (CN); HE, Yuhui, Shenzhen, Guangdong 518043 (CN)
(74) Representative: Maiwald GmbH
(86) International application number: PCT/CN2024/094175
(87) International publication number: WO 2025/035869

(57) **Abstract**

This application provides an electro-mechanical brake apparatus including an annular pressure sensor and a vehicle. The electro-mechanical brake apparatus includes the annular pressure sensor, a brake motor, and a brake, the brake motor is configured to drive the brake to move a friction lining through a plurality of transmission components, the brake includes a housing and at least one stopper, and the housing is configured to fasten the annular pressure sensor and the at least one stopper. Along an axial direction of the annular pressure sensor, one transmission component passes through the annular pressure sensor and the housing; and along a circumferential direction of the annular pressure sensor, each of the at least one stopper is arranged between the housing and the annular pressure sensor. In the electro-mechanical brake apparatus in this application, the annular pressure sensor is sleeved on an outer side of the one transmission component and positioned circumferentially, to ensure posture stability of the annular pressure sensor and reliability of brake force detection.

## Description

### CROSS-REFERENCE TO RELATED APPLICATIONS

This application claims priority to Chinese Patent Application No. 202311020271.9, filed with the China National Intellectual Property Administration on August 14, 2023 and entitled "ELECTRO-MECHANICAL BRAKE APPARATUS INCLUDING ANNULAR PRESSURE SENSOR AND VEHICLE", which is incorporated herein by reference in its entirety.

### TECHNICAL FIELD

This application relates to the field of vehicle technologies, and specifically, to an electro-mechanical brake apparatus including an annular pressure sensor and a vehicle.

### BACKGROUND

An electro-mechanical brake (electro-mechanical brake, EMB) apparatus uses a motor and a mechanical transmission mechanism together to drive a brake to brake. The electro-mechanical brake apparatus features a simple structure, sensitive response, stable load transfer, no hydraulic pipe, and the like, and has high transfer efficiency. The electro-mechanical brake apparatus can improve safety, maneuverability, and comfort of a vehicle.

To avoid large fluctuation of brake force acting on a wheel end, the electro-mechanical brake apparatus is provided with a pressure sensor to detect the brake force in real time and to match and adjust output torque of a brake motor. The pressure sensor needs to be properly arranged to ensure reliability of brake force detection.

### SUMMARY

This application provides an electro-mechanical brake apparatus including an annular pressure sensor and a vehicle. The annular pressure sensor is sleeved on an outer side of a transmission component and positioned circumferentially, to ensure posture stability of the annular pressure sensor and reliability of brake force detection. This application specifically includes the following solutions.

According to a first aspect, this application provides an electro-mechanical brake apparatus including an annular pressure sensor. The electro-mechanical brake apparatus includes the annular pressure sensor, a brake motor, and a brake, the brake motor is configured to drive the brake to move a friction lining through a plurality of transmission components, the brake includes a housing and at least one stopper, and the housing is configured to fasten the annular pressure sensor and the at least one stopper, where
along an axial direction of the annular pressure sensor, one transmission component passes through the annular pressure sensor and the housing; and
along a circumferential direction of the annular pressure sensor, each of the at least one stopper is arranged between the housing and the annular pressure sensor.

In the electro-mechanical brake apparatus in this application, the annular pressure sensor is sleeved on an outer side of the one transmission component, and the annular pressure sensor may be attached to the one transmission component along a circumferential direction to detect brake force, to ensure uniform force applied to the annular pressure sensor and improve detection accuracy. In addition, the stopper is disposed between the housing and the annular pressure sensor to form circumferential positioning for the annular pressure sensor, so that the annular pressure sensor can be limited to rotate inside the housing with the transmission component, for reducing a friction loss of the annular pressure sensor.

In an implementation, the one transmission component is spaced apart from an inner circumferential surface of the annular pressure sensor, and each of the at least one stopper is in contact with an outer circumferential surface of the annular pressure sensor.

In this implementation, the transmission component passes through an inner hole of the annular pressure sensor, and a gap is reserved between the transmission component and the inner hole, to avoid resistance caused by friction between the transmission component and the inner hole of the annular pressure sensor.

In an implementation, an outer circumferential surface of the annular pressure sensor includes a plurality of grooves, and each of the grooves is configured to cooperate with one stopper, where
along the circumferential direction of the annular pressure sensor, the plurality of grooves are distributed at spacings on the outer circumferential surface of the annular pressure sensor.

In this implementation, the stopper is embedded into the groove along a radial direction of the annular pressure sensor, to limit rotation of the annular pressure sensor.

In an implementation, along the axial direction of the annular pressure sensor, a length of the groove is less than a thickness of the annular pressure sensor.

In this implementation, to meet a function requirement of the annular pressure sensor, the groove of the annular pressure sensor is set as a blind hole, to avoid impact on a function caused by that the stopper passes through the annular pressure sensor along the axial direction.

In an implementation, an inner wall of the housing includes a plurality of accommodation grooves, and each of the accommodation grooves is configured to accommodate one stopper, where
along the axial direction of the annular pressure sensor, an opening of each of the accommodation grooves faces the annular pressure sensor; and
along the circumferential direction of the annular pressure sensor, the plurality of accommodation grooves are distributed at spacings on the inner wall of the housing.

In this implementation, the stopper is embedded into the accommodation groove along the radial direction of the annular pressure sensor, to implement circumferential limiting of the housing on the annular pressure sensor.

In an implementation, the stopper is one cylindrical member, where
along the circumferential direction of the annular pressure sensor, a width of the one cylindrical member is less than or equal to a width of groove opening of the accommodation groove.

In this implementation, interference fit may be formed between the stopper and the accommodation groove, to form better positioning for the stopper, and reliably limit rotation of the annular pressure sensor inside the housing.

In an implementation, along the axial direction of the annular pressure sensor, an end that is of each of the at least one stopper and that faces the friction lining includes a threaded hole, and each of the at least one stopper is partially embedded into one of the accommodation grooves.

In this implementation, the threaded hole is disposed at the end of the stopper to facilitate removal of the stopper.

In an implementation, the plurality of transmission components include a thrust bearing, and the thrust bearing is configured to be fixedly sleeved on the one transmission component, where
along the axial direction of the annular pressure sensor, the thrust bearing is arranged on a side that is of the annular pressure sensor and that faces the one transmission component, and the thrust bearing is configured to move toward or away from the annular pressure sensor along with rotation of the one transmission component.

In this implementation, an inner ring and an outer ring of the thrust bearing abut against the annular pressure sensor and the transmission component respectively, so that relative rotation between the transmission component and the annular pressure sensor can be counteracted and friction force can be reduced.

In an implementation, the plurality of transmission components include a rotation input member and a sliding output member, the rotation input member is coaxially driven with the one transmission component, the rotation input member is configured to drive the sliding output member to move along an axial direction of the rotation input member, and the sliding output member is configured to drive the friction lining to move, where
along the axial direction of the annular pressure sensor, the annular pressure sensor and the sliding output member are arranged relative to each other.

In this implementation, the annular pressure sensor is sleeved on the transmission component that is coaxially driven with the rotation input member. The annular pressure sensor detects the brake force of the electro-mechanical brake apparatus by detecting displacement pressure of the rotation input member along with the sliding output member.

In an implementation, the rotation input member includes a screw, the sliding output member includes a screw nut, a plurality of balls for reducing friction force are further disposed between the screw and the screw nut, the screw is engaged with the screw nut through the balls, and an axis of the annular pressure sensor coincides with an axis of the screw nut or an axis of the screw.

In this implementation, a structure of a ball screw structure is used in the plurality of transmission components, to improve transmission efficiency and transmission prevision of the electro-mechanical brake apparatus.

In an implementation, the one transmission component is the rotation input member, where
along the axial direction of the annular pressure sensor, the rotation input member passes through the annular pressure sensor and the housing.

In this implementation, the annular pressure sensor may be sleeved on the rotation input member.

In an implementation, the plurality of transmission components include a reducer, the reducer includes a plurality of gears, and the plurality of gears are configured for transmission connection between the brake motor and the one transmission component, where
along the axial direction of the annular pressure sensor, the annular pressure sensor and at least one gear are arranged opposite to each other on two sides of the housing.

In this implementation, the annular pressure sensor is disposed at an output end of the reducer, and the output end of the reducer may be configured to drive the rotation input member to rotate to implement braking.

In an implementation, the reducer includes an input shaft and an output shaft, and the input shaft is coaxially driven with a motor shaft of the brake motor, where
along the radial direction of the annular pressure sensor, the input shaft and the output shaft are disposed side by side; and
along the axial direction of the annular pressure sensor, the brake motor and the annular pressure sensor are arranged on a same side of the plurality of gears.

In this implementation, the reducer is arranged along an arrangement direction of the brake motor and the rotation input member, and is arranged adjacent to the brake motor and the rotation input member at the same time, to shorten a power transmission path from the brake motor to the sliding output member, improve transmission efficiency, and reduce a volume.

In an implementation, the one transmission component is the output shaft, where
along the axial direction of the annular pressure sensor, the output shaft passes through the annular pressure sensor and the housing.

In this implementation, the annular pressure sensor may be sleeved on an outer side of the output shaft of the reducer. The output shaft passes through the annular pressure sensor and the housing, and is coaxially driven with the rotation input member.

According to a second aspect, this application provides a vehicle, including wheels and the electro-mechanical brake apparatus provided in any one of the foregoing implementations, where an axial direction of an annular pressure sensor of a brake in the electro-mechanical brake apparatus is parallel to an axle of the wheel.

The vehicle provided in the second aspect of this application is braked by using the electro-mechanical brake apparatus provided in the first aspect of this application. Because the electro-mechanical brake apparatus provided in the first aspect of this application detects brake force in real time through the annular pressure sensor, to adjust output torque of a brake motor. This can improve a braking effect of the vehicle in this application, and reduce internal space.

### BRIEF DESCRIPTION OF DRAWINGS

FIG. 1 is a diagram of a work scenario of an electro-mechanical brake apparatus according to an embodiment of this application;
FIG. 2 is a diagram of an outline structure of an electro-mechanical brake apparatus according to an embodiment of this application;
FIG. 3 is a diagram of an outline structure of the electro-mechanical brake apparatus according to an embodiment shown in FIG. 2 in this application;
FIG. 4 is a diagram of a partially decomposed structure of the electro-mechanical brake apparatus according to an embodiment shown in FIG. 3 in this application;
FIG. 5 is a diagram of a partially decomposed structure of the electro-mechanical brake apparatus according to the embodiment shown in FIG. 3 in this application;
FIG. 6 is a diagram of a partial cross-sectional structure of the electro-mechanical brake apparatus according to the embodiment shown in FIG. 3 in this application;
FIG. 7 is a diagram of an outline structure of a reversing mechanism of the electro-mechanical brake apparatus according to an embodiment shown in FIG. 5 in this application;
FIG. 8 is a diagram of an outline structure of a reversing mechanism of the electro-mechanical brake apparatus according to the embodiment shown in FIG. 5 in this application;
FIG. 9 is a diagram of a partial cross-sectional structure of the electro-mechanical brake apparatus at a position A according to an embodiment shown in FIG. 6 in this application;
FIG. 10 is a schematic exploded view of a partial structure of an electro-mechanical brake apparatus according to an embodiment of this application;
FIG. 11 is a diagram of an outline structure of an annular pressure sensor of an electro-mechanical brake apparatus according to an embodiment of this application;
FIG. 12 is a diagram of an outline obtained after a partial structure of an electro-mechanical brake apparatus is hidden according to an embodiment of this application;
FIG. 13 is a diagram of an outline obtained after a partial structure of an electro-mechanical brake apparatus is hidden according to an embodiment of this application;
FIG. 14 is a diagram of a cross-sectional structure of the electro-mechanical brake apparatus according to an embodiment shown in FIG. 13 in this application; and
FIG. 15 is a diagram of arrangement of an internal structure of an electro-mechanical brake apparatus according to an embodiment of this application.

### DESCRIPTION OF EMBODIMENTS

The following describes technical solutions in embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

In this specification, the sequence numbers, such as "first" and "second", of components are merely intended to distinguish between the described objects, and do not have any sequential or technical meaning. Unless otherwise specified, the "connection" in this application includes a direct connection and an indirect connection. In descriptions of this application, it should be understood that an orientation or a position relationship indicated by the terms "above", "below", "front", "back", "top", "bottom", "inside", "outside", and the like is based on an orientation or a position relationship shown in the accompanying drawings, and is merely intended for ease of describing this application and simplifying description, but does not indicate or imply that a described apparatus or element needs to have a specific orientation or be constructed and operated in a specific orientation. Therefore, such terms shall not be understood as a limitation on this application.

In this application, unless otherwise specified and limited, when a first feature is "above" or "below" a second feature, the first feature may be in direct contact with the second feature, or the first feature may be in indirect contact with the second feature through an intermediate medium. In addition, that the first feature is "above" or "over" the second feature may be that the first feature is right above or obliquely above the second feature, or merely mean that a horizontal height of the first feature is greater than that of the second feature. That the first feature is "below" or "under" the second feature may be that the first feature is right below or obliquely below the second feature, or merely mean that a horizontal height of the first feature is less than that of the second feature.

This application provides an electro-mechanical brake apparatus including an annular pressure sensor. The electro-mechanical brake apparatus includes the annular pressure sensor, a brake motor, and a brake. The brake motor is configured to drive the brake to move a friction lining through a plurality of transmission components. The brake includes a housing and at least one stopper. The housing is configured to fasten the annular pressure sensor and the at least one stopper.

Along an axial direction of the annular pressure sensor, one transmission component passes through the annular pressure sensor and the housing.

Along a circumferential direction of the annular pressure sensor, each of the at least one stopper is arranged between the housing and the annular pressure sensor.

In this application, force on the annular pressure sensor in the electro-mechanical brake apparatus is uniform, so that detection accuracy can be improved. The stopper is configured to form circumferential positioning for the annular pressure sensor, so that the annular pressure sensor can be limited to rotating inside the housing with the transmission component, for reducing a friction loss of the annular pressure sensor.

This application provides a vehicle, including wheels and the foregoing electro-mechanical brake apparatus. An axial direction of an annular pressure sensor of a brake in the electro-mechanical brake apparatus is parallel to an axle of the wheel. The vehicle is braked through the foregoing electro-mechanical brake apparatus, and in this case, the electro-mechanical brake apparatus detects brake force in real time through the annular pressure sensor, to adjust output torque of a brake motor. This can improve a braking effect of the vehicle in this application and reduce internal space.

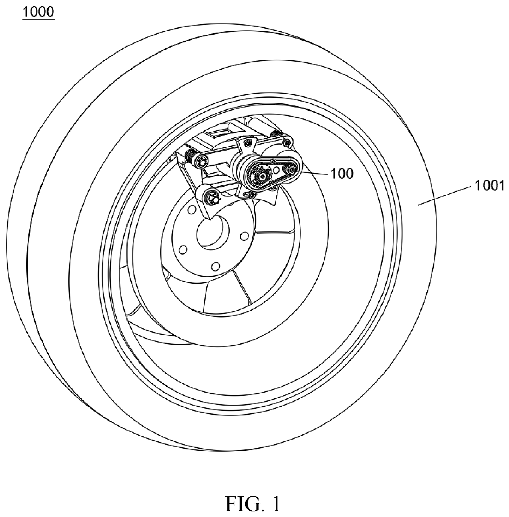

FIG. 1 is a diagram of a work scenario of an electro-mechanical brake apparatus 100 according to an embodiment of this application. To clearly show an internal functional structure of the electro-mechanical brake apparatus 100, a structure of a part of a housing in the electro-mechanical brake apparatus 100 is hidden in FIG. 1, and FIG. 1 shows only a structure of a vehicle 1000 at a wheel 1001. As shown in FIG. 1, the vehicle 1000 provided in this embodiment of this application includes the wheel 1001 and the electro-mechanical brake apparatus 100. The electro-mechanical brake apparatus 100 is fixedly disposed on a frame of the vehicle 1000, and is disposed at a position corresponding to the wheel 1001. The electro-mechanical brake apparatus 100 is configured to brake the wheel 1001.

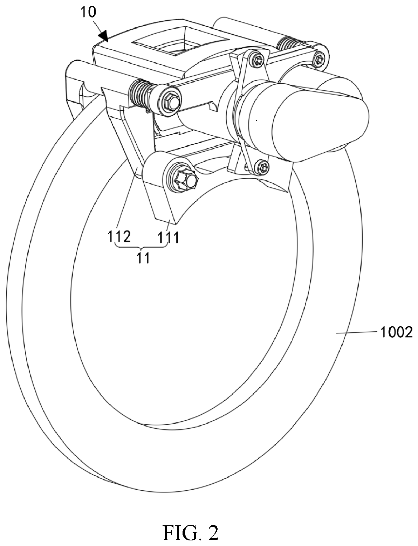

In an embodiment, a brake disc (shown as a brake disc 1002 in FIG. 2) is coaxially fastened on the wheel 1001, and the brake disc 1002 rotates synchronously with the wheel 1001 in a traveling process of the vehicle 1000. The electro-mechanical brake apparatus 100 is fastened on the frame, and is disposed corresponding to the brake disc 1002. The electro-mechanical brake apparatus 100 comes into contact with the brake disc 1002 to generate friction force to brake the brake disc 1002 and indirectly brake the wheel 1001.

It should be noted that in the embodiment shown in FIG. 1, only one wheel 1001 and one electro-mechanical brake apparatus 100 are used as an example for description. In an actual application scenario, the electro-mechanical brake apparatus 100 may be correspondingly disposed on a part of wheels or each wheel 1001 in the vehicle 1000.

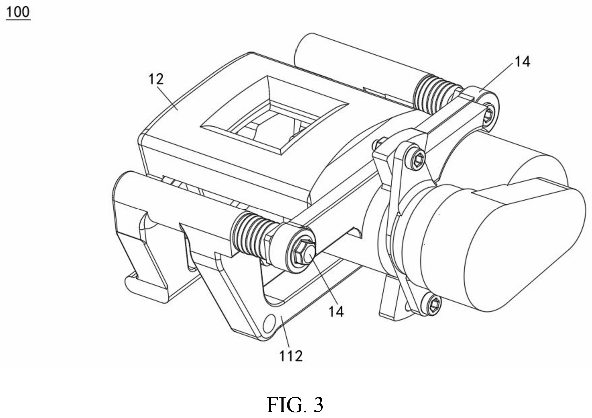

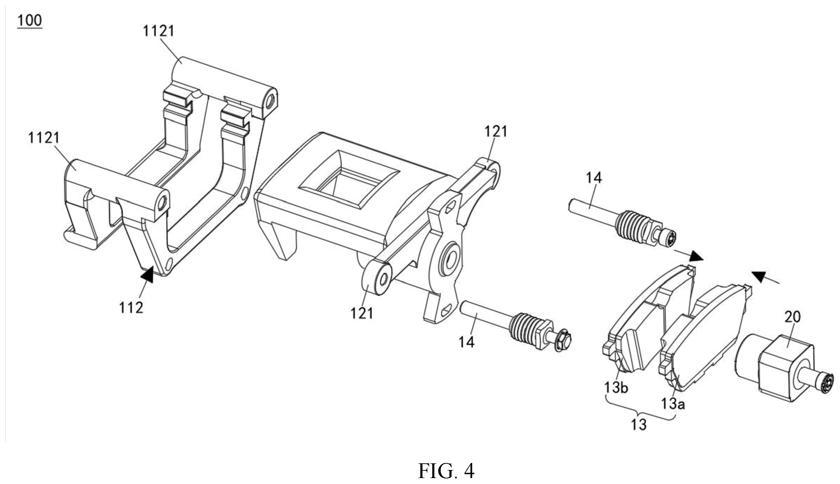

Refer to FIG. 2 to FIG. 4 together. FIG. 2 is a diagram of an outline structure of the electro-mechanical brake apparatus 100 according to an embodiment of this application. FIG. 3 is a diagram of an outline structure of the electro-mechanical brake apparatus 100 according to the embodiment shown in FIG. 2 in this application. FIG. 4 is a diagram of a partially decomposed structure of the electro-mechanical brake apparatus 100 according to an embodiment shown in FIG. 3 in this application. As shown in FIG. 2 to FIG. 4, the electro-mechanical brake apparatus 100 includes a brake 10 and a reversing mechanism 20, where the reversing mechanism 20 may be understood as a part of the foregoing plurality of transmission components. The reversing mechanism 20 is configured to move toward the brake 10 and drive the brake 10 to come into contact with the brake disc 1002 to generate friction force, for achieving an effect of braking the brake disc 1002. In an embodiment, the brake 10 includes at least one friction lining 13, and the reversing mechanism 20 drives the friction lining 13 to move toward the brake disc 1002 to brake the wheel 1001.

In this specification of this application, an example in which there are two friction linings 13 is used for description, and in embodiments of this application, a first friction lining 13a and a second friction lining 13b are separately used as examples for description.

For example, as shown in FIG. 2 to FIG. 4, the brake 10 includes a caliper bracket 11 and a floating caliper body 12. The caliper bracket 11 is fastened on the frame of the vehicle 1000, and the floating caliper body 12 is slidably connected to the caliper bracket 11. In addition, a sliding direction of the floating caliper body 12 relative to the caliper bracket 11 is parallel to an axial direction of the brake disc 1002 of the wheel 1001.

The two friction linings 13 of the brake 10 are respectively arranged on two opposite sides of the brake disc 1002 along the axial direction of the brake disc 1002. Along a rotation axis of the brake disc 1002, the first friction lining 13a is located on a side that is of the brake disc 1002 and that is close to the reversing mechanism 20, the first friction lining 13a is slidably connected to the floating caliper body 12, and the second friction lining 13b is located on a side that is of the brake disc 1002 and that is away from the reversing mechanism 20, and is fixedly connected to the floating caliper body 12. The rotation axis of the brake disc 1002 may be understood as the axial direction of the brake disc 1002, or may be understood as a connection line between respective circle centers of two end faces of the brake disc 1002.

The reversing mechanism 20 moves toward the brake disc 1002 along the rotation axis of the brake disc 1002, and synchronously drives the first friction lining 13a to slide toward the brake disc 1002. A sliding direction of the first friction lining 13a is parallel to the rotation axis of the brake disc 1002.

After the reversing mechanism 20 moves and drives the first friction lining 13a to move toward the brake disc 1002 until the first friction lining 13a abuts against the brake disc 1002, reverse thrust is generated on the first friction lining 13a along the rotation axis of the brake disc 1002, that is, the brake disc 1002 applies reverse thrust to the first friction lining 13a. The reversing mechanism 20 continues to move under the action of the thrust, and may drive the floating caliper body 12 to slide relative to the caliper bracket 11.

A direction of the reverse thrust applied by the brake disc 1002 to the first friction lining 13a is a direction toward the reversing mechanism 20 along the rotation axis of the brake disc 1002, and therefore, the floating caliper body 12 is driven to slide toward the reversing mechanism 20 along the rotation axis of the brake disc 1002, and the second friction lining 13b fixedly connected to the floating caliper body 12 is synchronously driven to slide toward the reversing mechanism 20 along the rotation axis of the brake disc 1002, thereby achieving an effect that the reversing mechanism 20 drives the two friction linings 13 to approach each other from two opposite sides of the brake disc 1002 (as shown by solid arrows in FIG. 4).

In other words, that the reversing mechanism 20 drives the first friction lining 13a to move toward the brake disc 1002 to brake the wheel 1001 may be understood as that the reversing mechanism 20 drives one of the friction linings 13 of the brake 10 to slide toward the brake disc 1002 and makes the two friction linings 13 approach each other. When the two friction linings 13 approach each other along the axial direction of the brake disc 1002 until the two friction linings 13 respectively abut against the two opposite end faces of the brake disc 1002, friction force is separately generated between the friction linings 13 and the brake disc 1002 to reduce a rotational speed of the brake disc 1002. Because the brake disc 1002 rotates synchronously with the wheel 1001, decrease of the rotational speed of the brake disc 1002 synchronously causes decrease of a rotational speed of the wheel 1001, for achieving an effect of braking the wheel 1001, thereby implementing a function of the electro-mechanical brake apparatus 100 braking the vehicle 1000.

In addition, in embodiments of this application, the two friction linings 13 respectively abut against the two opposite end faces of the brake disc 1002 along the axial direction of the brake disc 1002 to brake the brake disc 1002. Because the friction lining 13 has a relatively large area, the friction lining 13 has a relatively large contact area with the brake disc 1002 when abutting against the end face of the brake disc 1002, and relatively large friction force can be formed between the brake disc 1002 and the friction lining 13, to ensure reliable braking on the wheel 1001.

When the reversing mechanism 20 moves toward the brake disc 1002 along the rotation axis of the brake disc 1002, the reversing mechanism 20 generates the thrust and pushes the floating caliper body 12 to slide relative to the caliper bracket 11, thereby achieving an effect that the reversing mechanism 20 drives the floating caliper body 12 to slide toward the brake disc 1002. When the reversing mechanism 20 drives the floating caliper body 12 to slide to drive the second friction lining 13b fixedly connected to the floating caliper body 12 to come into contact with the brake disc 1002 and form friction, the first friction lining 13a and the second friction lining 13b cooperate with each other to achieve an effect that the electro-mechanical brake apparatus 100 brakes the brake disc 1002.

Because the caliper bracket 11 is fastened on the frame of the vehicle 1000, when the reversing mechanism 20 moves along the rotation axis of the brake disc 1002 in a direction close to the brake disc 1002, the floating caliper body 12 is synchronously driven to slide. It may be understood that, in this case, a displacement direction of the reversing mechanism 20 is parallel to the sliding direction of the floating caliper body 12 relative to the caliper bracket 11. In other words, the displacement direction of the reversing mechanism 20 is parallel to the rotation axis of the brake disc 1002, or the displacement direction of the reversing mechanism 20 is parallel to an axle of the wheel 1001.

In an embodiment, as shown in FIG. 2 to FIG. 4, the caliper bracket 11 includes a knuckle 111 and a bracket body 112 that are fixedly connected. The caliper bracket 11 is fastened on the frame of the vehicle 1000 through the knuckle 111, and along a radial direction of the brake disc 1002, the knuckle 111 is located on a side that is of the bracket body 112 and that is close to an axis of the brake disc 1002.

The bracket body 112 includes two feet 1121, the two feet 1121 extend along the radial direction of the brake disc 1002 and toward a direction away from the axis of the brake disc 1002, each foot 1121 is provided with a through hole, and along the axial direction of the brake disc 1002, each through hole penetrates through a foot 1121 corresponding to the through hole. In other words, as shown in FIG. 4, along the radial direction of the brake disc 1002, the two feet 1121 are located on a side that is of the bracket body 112 and that is away from the knuckle 111.

The floating caliper body 12 includes two support lugs 121, each support lug 121 is provided with a through hole, and along the axial direction of the brake disc 1002, each through hole penetrates through a support lug 121 corresponding to the through hole. The through holes of the two support lugs 121 and the through holes of the two feet 1121 are disposed in a one-to-one correspondence. The brake 10 further includes two slide pins 14. Each slide pin 14 is disposed corresponding to a through hole of a support lug 121, and passes through the support lug 121 and a foot 1121 corresponding to the support lug 121.

It may be understood that a slide pin 14 is disposed corresponding to each support lug 121, so that the floating caliper body 12 is slidably connected to the caliper bracket 11 through the slide pins 14. To be specific, the floating caliper body 12 can slide relative to the bracket body 112 of the caliper bracket 11 through the through holes in the support lugs 121 to cooperate with the slide pins 14, for achieving an effect that the floating caliper body 12 is slidably connected to the caliper bracket 11. At the same time, both a through hole in a support lug 121 and a corresponding through hole in a foot 1121 extend along the axial direction of the brake disc 1002, so that the floating caliper body 12 can slide relative to the caliper bracket 11 along the axial direction of the brake disc 1002.

At the same time, the slide pins 14 separately pass through the through holes in the support lugs 121 and the through holes in the feet 1121, to implement a sliding connection between the floating caliper body 12 and the caliper bracket 11. Because each through hole extends along the axial direction of the brake disc 1002, the through hole can limit the slide pin 14 to move in the through hole along the axial direction of the brake disc 1002, for avoiding offset of the slide pin 14 to reduce displacement precision of the floating caliper body 12, and further improving braking reliability of the two friction linings 13 for the wheel 1001.

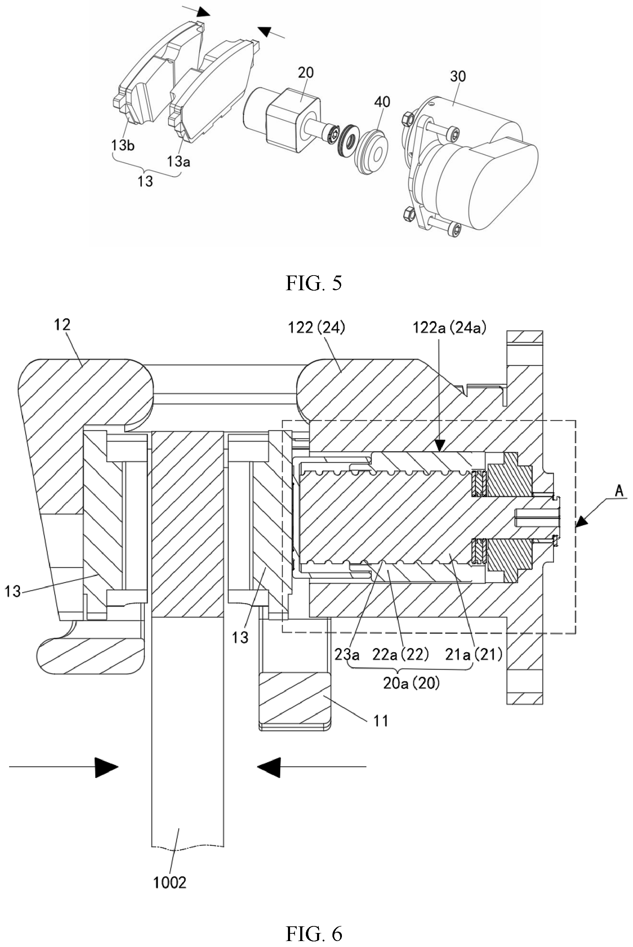

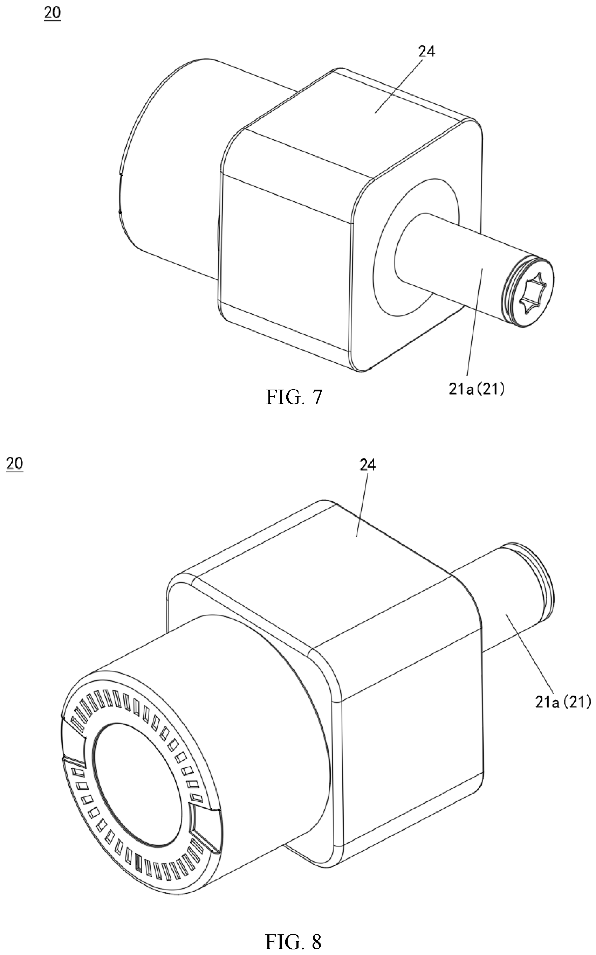

In an embodiment, refer to FIG. 5 to FIG. 8 together. FIG. 5 is a diagram of a partially decomposed structure of the electro-mechanical brake apparatus 100 according to the embodiment shown in FIG. 3 in this application. FIG. 6 is a diagram of a partial cross-sectional structure of the electro-mechanical brake apparatus 100 according to the embodiment shown in FIG. 3 in this application. FIG. 7 is a diagram of an outline structure of the reversing mechanism 20 of the electro-mechanical brake apparatus 100 according to the embodiment shown in FIG. 5 in this application. FIG. 8 is a diagram of an outline structure of the reversing mechanism 20 of the electro-mechanical brake apparatus 100 according to the embodiment shown in FIG. 5 in this application.

As shown in FIG. 5 to FIG. 8, the electro-mechanical brake apparatus 100 includes a brake motor 30. Along the rotation axis of the brake disc 1002, the brake motor 30 is located on a side that is of the reversing mechanism 20 and that is away from the brake 10, and the brake motor 30 is in transmission connection to the reversing mechanism 20. The brake motor 30 is configured to input power to the reversing mechanism 20 to drive the reversing mechanism 20 to move along the rotation axis of the brake disc 1002, the reversing mechanism 20 can convert rotational motion input by the brake motor 30 into linear motion along the rotation axis of the brake disc 1002.

In other words, the electro-mechanical brake apparatus 100 in this application includes the brake motor 30 and the brake 10. The brake motor 30 drives the brake 10 to move the friction linings 13 through the plurality of transmission components. The plurality of transmission components include the reversing mechanism 20.

In an embodiment, the reversing mechanism 20 includes a rotation input member 21 and a sliding output member 22. In other words, the plurality of transmission components include the rotation input member 21 and the sliding output member 22. The rotation input member 21 is in transmission connection between the sliding output member 22 and the brake motor 30, the sliding output member 22 is in transmission connection between the rotation input member 21 and at least one of the friction linings 13, and a displacement direction of the sliding output member 22 is parallel to the rotation axis of the brake disc 1002. As shown in FIG. 5 and FIG. 6, the sliding output member 22 is in transmission connection between the rotation input member 21 and the first friction lining 13a, and is configured to drive the first friction lining 13a to move along the rotation axis of the brake disc 1002. It may be understood that the brake motor 30 drives the rotation input member 21 to rotate to drive the sliding output member 22 to move toward the brake 10.

That is, the brake motor 30 drives the rotation input member 21 to rotate around an axis of the rotation input member 21, to input the power output by the brake motor 30 to the brake 10 through the rotation input member 21 and drive the at least one of the friction linings 13 to move. The rotation input member 21 rotates around the axis of the rotation input member 21 and synchronously drives the sliding output member 22 to move, to transmit, to the sliding output member 22, the power input by the brake motor 30 to the rotation input member 21, and the sliding output member 22 drives the at least one of the friction linings 13 to move along the rotation axis of the brake disc 1002, thereby implementing a function of driving the brake 10 to brake the vehicle 1000.

For example, in the examples in FIG. 5 to FIG. 8, the reversing mechanism 20 may be but is not limited to a ball screw 20a, to implement, through the ball screw 20a, a function of converting the rotational motion input by the brake motor 30 into the linear motion that drives the friction linings 13 to move along the rotation axis of the brake disc 1002.

In an embodiment, the ball screw 20a includes a screw 21a and a screw nut 22a that are engaged with each other. In this case, the rotation input member 21 includes the screw 21a, and the sliding output member 22 includes the screw nut 22a. That is, as shown in FIG. 5 and FIG. 6, the screw 21a is constructed as the rotation input member 21, and the screw nut 22a is constructed as the sliding output member 22.

The brake motor 30 drives the screw 21a to rotate around an axis of the screw 21a, and drives the screw nut 22a engaged with the screw 21a to move along the axis of the screw 21a, so that the first friction lining 13a can be pushed to move along the rotation axis of the brake disc 1002 to abut against the brake disc 1002. In this way, the first friction lining 13a and the second friction lining 13b approach each other and brake the brake disc 1002, to implement a function of the brake 10 braking the vehicle 1000.

In other words, because the screw 21a is engaged with the screw nut 22a for transmission, when the screw 21a is driven by the brake motor 30 to rotate along the rotation axis of the screw 21a, a rotation action of the screw 21a is transferred to the screw nut 22a, so that the screw nut 22a can be driven to form an action of displacement along a length direction of the screw 21a. The screw nut 22a moves toward the brake disc 1002 along the rotation axis of the brake disc 1002, and drives, along the rotation axis of the brake disc 1002, the friction linings 13 to move toward the brake disc 1002, so that the friction linings 13 may come into contact with the end faces of the brake disc 1002 and form friction force, thereby achieving an effect of braking the brake disc 1002.

It may be understood that the ball screw 20a has relatively high transmission precision and a small friction loss. This can improve transmission efficiency and transmission reliability of the electro-mechanical brake apparatus 100 in this application.

It should be noted that, as shown in FIG. 5 to FIG. 8, only one possible embodiment of the reversing mechanism 20 is used as an example for description. However, a manner in which the rotational motion of the brake motor 30 can be converted into the linear motion along the rotation axis of the brake disc 1002 in embodiments of this application is not limited thereto. In another embodiment of this application, the reversing mechanism 20 may alternatively be another structural part or structural apparatus that can convert the rotational motion input by the brake motor 30 into the linear motion. This is not specifically limited in embodiments of this application.

In an embodiment, a plurality of balls 23a for reducing friction force are further disposed between the screw 21a and the screw nut 22a, and the rotation input member 21 (namely, the screw 21a) is engaged with the sliding output member 22 (namely, the screw nut 22a) through the balls 23a. It may be understood that, by disposing the balls 23a, friction force between the rotation input member 21 and the sliding output member 22 in a rotation process can be reduced, and a rotation effect and rotation stability of the sliding output member 22 relative to the rotation input member 21 can be improved.

In an embodiment, continue to refer to FIG. 5 and FIG. 6. The floating caliper body 12 of the brake 10 includes an accommodation portion 122, an accommodation hole 122a is opened at a position of the accommodation portion 122 corresponding to the reversing mechanism 20, and the position of the accommodation hole 122a is correspondingly used to accommodate the reversing mechanism 20.

For example, as shown in FIG. 6, the accommodation portion 122 is located on a side that is of the floating caliper body 12 and that is away from the friction lining 13, and in a direction in which the reversing mechanism 20 drives the friction lining 13 to move, the accommodation hole 122a penetrates through the floating caliper body 12, so that the rotation input member 21 accommodated in the accommodation hole 122a can be in transmission connection to the brake motor 30, and then the power output by the brake motor 30 can be input to the reversing mechanism 20.

When the brake motor 30 drives the rotation input member 21 to rotate around the axis of the rotation input member 21 to input the power to the reversing mechanism 20, the rotation input member 21 drives the sliding output member 22 engaged with the rotation input member 21 to move in the accommodation hole 122a.

It may be understood that the reversing mechanism 20 is accommodated in the accommodation hole 122a of the accommodation portion 122, so that the floating caliper body 12 can protect and seal the reversing mechanism 20, to avoid impact on transmission efficiency of the reversing mechanism 20 caused by entry of external water vapor, dust, or other impurities and foreign matter to the accommodation hole 122a.

In other words, as shown in FIG. 6, the accommodation portion 122 of the floating caliper body 12 may be constructed as a housing 24 of the reversing mechanism 20, and an inner wall of the accommodation hole 122a is constructed as an inner wall 24a of the housing 24 of the reversing mechanism 20. The reversing mechanism 20 is accommodated by using the floating caliper body 12, for fully utilizing a structure feature of the floating caliper body 12 when the brake 10 drives the at least one friction lining 13. The accommodation portion 122 can seal and protect the reversing mechanism 20, so that another structural part disposed for being constructed as the housing 24 of the reversing mechanism 20 can be reduced when transmission efficiency and a transmission effect of the reversing mechanism 20 are ensured, for further improving an effect of a compact design of the electro-mechanical brake apparatus 100.

It should be noted that, as shown in FIG. 6, only an example in which the accommodation hole 122a is opened in the floating caliper body 12 to accommodate the reversing mechanism 20 is used for description. However, that only the floating caliper body 12 can accommodate the reversing mechanism 20 is not limited in embodiments of this application. In another embodiment of this application, another structural part, for example, a housing of the brake 10, that can accommodate the reversing mechanism 20 may be further disposed. This is not specifically limited in this application.

In the specification of this application, an example in which the accommodation portion 122 of the floating caliper body 12 is constructed as the housing 24 of the reversing mechanism 20 is used for description. It may be understood that the housing 24 of the reversing mechanism 20 may also be understood as the housing of the brake 10.

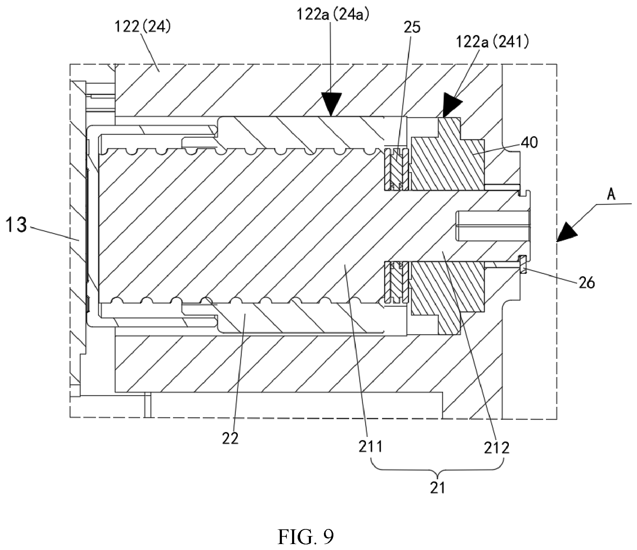

Refer to FIG. 9 together with FIG. 5. FIG. 9 is a diagram of a partial cross-sectional structure of the electro-mechanical brake apparatus 100 at a position A according to the embodiment shown in FIG. 6 in this application. The electro-mechanical brake apparatus 100 includes an annular pressure sensor 40, and the housing of the brake 10 (namely, the housing 24 of the reversing mechanism 20) is configured to fasten the annular pressure sensor 40. The annular pressure sensor 40 is configured to detect pressure generated when the reversing mechanism 20 drives the at least one friction lining 13.

Specifically, along the displacement direction of the reversing mechanism 20, the annular pressure sensor 40 is disposed on a side that is of the reversing mechanism 20 and that is away from the brake 10, and the at least one friction lining 13 is located on a side that is of the reversing mechanism 20 and that is away from the annular pressure sensor 40. Both the annular pressure sensor 40 and the reversing mechanism 20 are accommodated in the housing 24. Along the displacement direction of the reversing mechanism 20, the annular pressure sensor 40 is located between the inner wall of the housing 24 and the reversing mechanism 20.

The annular pressure sensor 40 is sleeved on one of the plurality of transmission components. In the embodiment shown in the figure, the one transmission component is the rotation input member 21. In this case, the one transmission component passes through the annular pressure sensor 40 and the housing (namely, the housing 24) of the brake 10 along an axial direction of the annular pressure sensor 40.

In the electro-mechanical brake apparatus 100 in this application, the annular pressure sensor 40 is sleeved on an outer side of the one transmission component, and the annular pressure sensor 40 may be attached to the one transmission component along a circumferential direction to detect the brake force, to ensure uniform force applied to the annular pressure sensor 40 and improve detection accuracy.

As shown in FIG. 5 and FIG. 9, along a moving direction of the sliding output member 22 of the reversing mechanism 20, the annular pressure sensor 40 is located on a side that is of the rotation input member 21 of the reversing mechanism 20 and that is away from the friction lining 13. A geometric center of the annular pressure sensor 40 coincides with a rotation axis of the rotation input member 21.

That is, an axis of the annular pressure sensor 40 with an annular structure coincides with an axis of the rotation input member 21. It may also be understood that the annular pressure sensor 40 and the rotation input member 21 are coaxially arranged along the moving direction of the sliding output member 22 of the reversing mechanism 20. In combination with the embodiment in which the ball screw is used in the reversing mechanism 20, the axis of the annular pressure sensor 40 coincides with the axis of the screw nut 22a or the screw 21a.

In other words, the rotation input member 21 is coaxially driven with the one transmission component, the rotation input member 21 is configured to drive the sliding output member 22 to move along an axial direction of the rotation input member 21, the sliding output member 22 is configured to drive the friction lining 13 to move, and along the axial direction of the annular pressure sensor 40, the annular pressure sensor 40 and the sliding output member 22 are arranged relative to each other. The annular pressure sensor 40 is sleeved on the one transmission component that is coaxially driven with the rotation input member 21. The annular pressure sensor 40 detects the brake force of the electro-mechanical brake apparatus 100 by detecting displacement pressure of the rotation input member 21 along with the sliding output member 22.

In an embodiment, the one transmission component is the rotation input member 21, and the rotation input member 21 passes through the annular pressure sensor 40 and the housing (namely, the housing 24) of the brake 10 along the axial direction of the annular pressure sensor 40. The annular pressure sensor 40 may be sleeved on the rotation input member 21.

It may be understood that the annular pressure sensor 40 and the rotation input member 21 of the reversing mechanism 20 are arranged coaxially, so that the annular pressure sensor 40 can cooperate with the sliding output member 22 of the reversing mechanism 20 to slide synchronously along the axial direction of the rotation input member 21. In this way, force applied to the annular pressure sensor 40 during braking can be more uniform, and reliability of pressure data detected by the annular pressure sensor 40 can be improved.

In an embodiment, the one transmission component is spaced apart from an inner circumferential surface of the annular pressure sensor 40. In this case, a transmission component passes through an inner hole of the annular pressure sensor, and an outer circumferential surface of the transmission component is spaced apart from the inner circumferential surface of the annular pressure sensor 40, that is, a gap is reserved between the transmission component and the inner hole of the annular pressure sensor 40, to avoid resistance formed by friction between the transmission component (the outer circumferential surface of the transmission component) and the inner hole (the inner circumferential surface) of the annular pressure sensor 40. In an embodiment, the brake motor 30 is electrically connected to the annular pressure sensor 40, and the brake motor 30 is configured to receive pressure detected by the annular pressure sensor 40 to adjust output torque.

When the brake motor 30 drives the reversing mechanism 20 to drive the at least one friction lining 13, the annular pressure sensor 40 detects pressure applied by the reversing mechanism 20 to the friction lining 13, and feeds back a detected pressure value to the brake motor 30. The brake motor 30 receives the pressure value detected by the annular pressure sensor 40, and adjusts output torque of a motor shaft 31 of the brake motor 30 based on the obtained pressure value.

It may be understood that the annular pressure sensor 40 is disposed, so that brake pressure applied by the brake 10 to the friction lining 13 can be detected in real time through the annular pressure sensor 40, and a status of braking the vehicle 1000 by the electro-mechanical brake apparatus 100 in this application can be obtained in real time. The annular pressure sensor 40 is disposed along a direction of braking displacement of the brake 10, and is configured to detect brake pressure applied by the sliding output member 22 to the brake disc 1002 and correspondingly adjust output torque of the brake motor 30, so that the brake pressure applied to the brake disc 1002 is relatively constant, thereby ensuring a braking effect.

In addition, through cooperation between the annular pressure sensor 40 and the brake motor 30, the electro-mechanical brake apparatus 100 can brake the vehicle 1000 to meet a braking requirement of a user, and the output torque of the brake motor 30 can be adjusted in a matched manner, thereby ensuring that braking of the electro-mechanical brake apparatus 100 is stable and reliable.

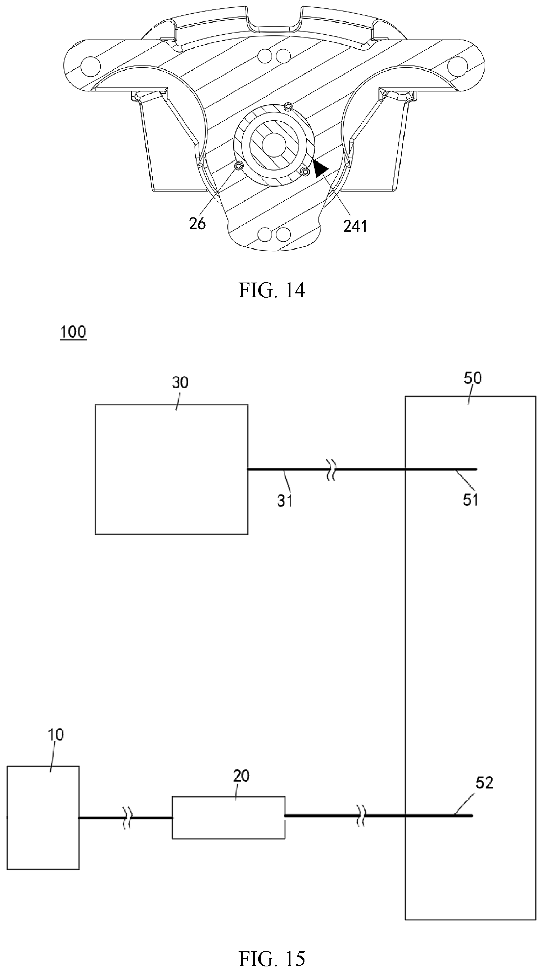

In an embodiment, along a direction vertical to the displacement direction of the reversing mechanism 20, the brake motor 30 and the annular pressure sensor 40 are arranged adjacent to each other, and a geometric center of the annular pressure sensor 40 is closer to the rotation axis of the brake disc 1002 than the motor shaft (shown as the motor shaft 31 in FIG. 15) of the brake motor 30.

It may be understood that, to ensure that the electro-mechanical brake apparatus 100 outputs enough brake force to brake the vehicle 1000 in a traveling process, the brake motor 30 usually outputs relatively large power and torque to meet the braking requirement. Therefore, a volume of the brake motor 30 is relatively large. As shown in FIG. 5 and FIG. 6, the annular pressure sensor 40 is disposed closer to the rotation axis of the brake disc 1002 than the brake motor 30, so that a width of the electro-mechanical brake apparatus 100 can be reduced, and wheel end space can be reduced.

In an embodiment, the annular pressure sensor 40 is located on a side that is of the rotation input member 21 and that is away from the sliding output member 22, one side of the annular pressure sensor 40 abuts against the rotation input member 21, and the other side of the annular pressure sensor 40 abuts against the inner wall of the housing 24 of the reversing mechanism 20.

For example, as shown in FIG. 9, the rotation input member 21 includes an engagement portion 211 and an extension portion 212, and an external thread engaged with the sliding output member 22 is disposed on a periphery of the engagement portion 211, to drive the sliding output member 22 to move. The engagement portion 211 and the extension portion 212 are sequentially arranged along the axial direction of the rotation input member 21, and the engagement portion 211 is closer to the friction lining 13 than the extension portion 212. That is, along a moving direction in which the reversing mechanism 20 drives the friction lining 13, the extension portion 212 is located on a side that is of the engagement portion 211 and that is away from the friction lining 13.

As shown in FIG. 9, an outer diameter of the extension portion 212 is less than an outer diameter of the engagement portion 211. The annular pressure sensor 40 is sleeved on the periphery of the extension portion 212, and along the axial direction of the rotation input member 21, the annular pressure sensor 40 abuts against and is located between the engagement portion 211 and the inner wall 24a of the housing 24 of the reversing mechanism 20. To be specific, along the axial direction of the rotation input member 21, two opposite end faces of the annular pressure sensor 40 respectively abut against the engagement portion 211 and the inner wall 24a of the housing 24 of the reversing mechanism 20.

When the rotation input member 21 rotates around the axis of the rotation input member 21 and drives the sliding output member 22 to slide along the rotation axis of the brake disc 1002 toward the brake disc 1002, the sliding output member 22 synchronously drives the friction lining 13 to abut against the brake disc 1002. When the friction lining 13 abuts against the brake disc 1002, the brake disc 1002 generates reverse thrust along the rotation axis of the brake disc 1002 toward the reversing mechanism 20. The reverse thrust generated by the brake disc 1002 is applied to the reversing mechanism 20 through the friction lining 13, and is transferred to the annular pressure sensor 40 through the reversing mechanism 20, so that the annular pressure sensor 40 can detect thrust of braking the brake disc 1002 by the reversing mechanism 20.

It may be understood that displacement of the annular pressure sensor 40 in the radial direction of the rotation input member 21 can be limited by disposing the annular pressure sensor 40 to be sleeved on the periphery of the extension portion 212, to avoid an adverse phenomenon like offset or tilt of the annular pressure sensor 40 in the radial direction of the rotation input member 21 to reduce detection accuracy and detection of the annular pressure sensor 40.

At the same time, the annular pressure sensor 40 is disposed between and abut against the rotation input member 21 and the housing 24 of the reversing mechanism 20 along the axial direction of the rotation input member 21, and the annular pressure sensor 40 is disposed at a distal end of the sliding output member 22, namely, on a side that is of the rotation input member 21 and that is away from the sliding output member 22, so that the annular pressure sensor 40 obtains pressure data by detecting reaction force generated when the reversing mechanism 20 brakes the brake disc 1002, to provide an avoidance position for the sliding output member 22 to brake the brake disc 1002.

Usually, an electro-mechanical brake apparatus provides driving force by a brake motor, and a mechanical transmission mechanism is configured to receive the driving force and push a friction lining to brake a brake disc of a wheel. The driving force provided by the brake motor is relatively constant, and brake force applied to a wheel end varies with a wear amount of the friction lining. As a result, the brake force of the electro-mechanical brake apparatus may be too high or too low, affecting a braking effect.

However, in the electro-mechanical brake apparatus 100 in this application, the annular pressure sensor 40 is disposed along the direction of braking displacement, and is configured to detect the brake pressure applied by the sliding output member 22 to the brake disc 1002 and correspondingly adjust the output torque of the brake motor 30, so that the brake pressure applied to the brake disc 1002 is relatively constant, thereby ensuring the braking effect. In addition, a volume of the brake motor 30 is relatively large, and the annular pressure sensor 40 is disposed closer to the rotation axis of the brake disc 1002 than the brake motor 30, so that a width of the electro-mechanical brake apparatus 100 can be reduced, and wheel end space can be reduced.

The vehicle 1000 provided in this application performs braking by using the electro-mechanical brake apparatus 100 provided in any one of the foregoing embodiments. Because the electro-mechanical brake apparatus 100 provided in any one of the foregoing embodiments of this application detects the brake force in real time through the annular pressure sensor 40, to adjust the output torque of the brake motor 30. This can improve a braking effect of the vehicle 1000 in this application and reduce internal space. In other words, the vehicle 1000 in this application is equipped with the electro-mechanical brake apparatus 100 provided in any one of the foregoing embodiments, and therefore, the vehicle 1000 in this application has all possible beneficial effects of the electro-mechanical brake apparatus 100 provided in any one of the foregoing embodiments.

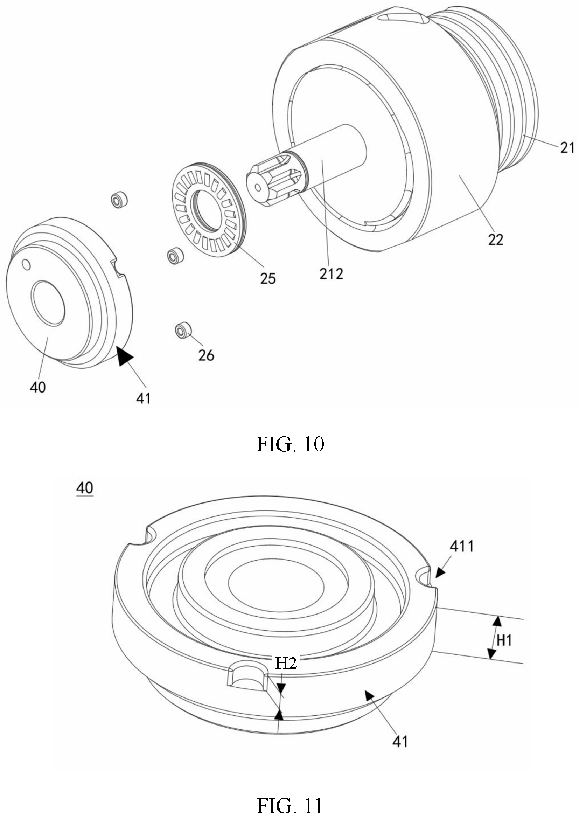

In an embodiment, refer to FIG. 10 together with FIG. 9. FIG. 10 is a schematic exploded view of a partial structure of the electro-mechanical brake apparatus 100 according to an embodiment of this application. As shown in FIG. 9 and FIG. 10, the reversing mechanism 20 includes a thrust bearing 25. In other words, the plurality of transmission components further include the thrust bearing 25. Along the displacement direction of the reversing mechanism 20, the thrust bearing 25 is located between the rotation input member 21 and the annular pressure sensor 40, and the thrust bearing 25 is configured to reduce friction force between the rotation input member 21 and the annular pressure sensor 40.

The thrust bearing 25 is configured to be fixedly sleeved on a transmission component. Along the axial direction of the annular pressure sensor 40, the thrust bearing 25 is arranged on a side that is of the annular pressure sensor 40 and that faces the transmission component, and the thrust bearing 25 is configured to move toward or away from the annular pressure sensor 40 along with rotation of the transmission component. An inner ring and an outer ring of the thrust bearing 25 abut against the annular pressure sensor 40 and the transmission component respectively, so that relative rotation between the transmission component and the annular pressure sensor 40 can be counteracted and friction force can be reduced.

For example, as shown in FIG. 9 and FIG. 10, the thrust bearing 25 is sleeved on the periphery of the extension portion 212 of the rotation input member 21, and along the axial direction of the rotation input member 21, the thrust bearing 25 is coaxially arranged between the engagement portion 211 of the rotation input member 21 and the annular pressure sensor 40. In an embodiment, the inner ring and the outer ring of the thrust bearing 25 abut against the annular pressure sensor 40 and the reversing mechanism 20 respectively. As shown in FIG. 9 and FIG. 10, the inner ring of the thrust bearing 25 is fastened to the extension portion 212, and the outer ring of the thrust bearing 25 abuts against the annular pressure sensor 40.

It may be understood that, by disposing the thrust bearing 25 to be coaxially arranged between the engagement portion 211 of the rotation input member 21 and the annular pressure sensor 40, friction resistance generated by the rotation input member 21 and the sliding output member 22 in a movement process can be reduced, to improve a transmission effect and transmission efficiency of the reversing mechanism 20, and reduce a friction loss of the reversing mechanism 20 in the movement process.

In addition, the inner ring and the outer ring of the thrust bearing 25 abut against the annular pressure sensor 40 and the reversing mechanism 20 respectively, so that the thrust bearing 25 implements a thrust transfer function, and the reverse thrust applied by the friction lining 13 to the reversing mechanism 20 can be transferred to the annular pressure sensor 40, thereby improving detection of the annular pressure sensor 40. In addition, relative rotation between the reversing mechanism 20 and the annular pressure sensor 40 can be counteracted and friction force can be reduced.

In an embodiment, the reversing mechanism 20 includes a stopper 26, and the stopper 26 is fastened between the housing 24 of the reversing mechanism 20 and the annular pressure sensor 40 along the axial direction of the rotation input member 21. The stopper 26 is configured to limit rotation of the annular pressure sensor 40 inside the housing 24 of the reversing mechanism 20.

In other words, the housing (namely, the housing 24) of the brake 10 is configured to fasten the annular pressure sensor 40 and at least one stopper 26, and along a circumferential direction of the annular pressure sensor 40, each of the at least one stopper 26 is arranged between the housing (namely, the housing 24) of the brake and the annular pressure sensor 40. The stopper 26 is disposed between the housing (namely, the housing 24) of the brake 10 and the annular pressure sensor 40, to form circumferential positioning for the annular pressure sensor 40, limit the annular pressure sensor 40 to rotate with the transmission component and inside the housing (namely, the housing 24) of the brake 10, and reduce the friction loss of the annular pressure sensor 40. In an embodiment, each of the at least one stopper 26 is in contact with an outer circumferential surface of the annular pressure sensor 40.

For example, as shown in FIG. 9 and FIG. 10, along the axial direction of the rotation input member 21 of the reversing mechanism 20, the stopper 26 is located on a side that is of the annular pressure sensor 40 and that is away from the rotation input member 21. The circumferential positioning for the annular pressure sensor 40 is formed by using the stopper 26, so that rotational motion of the annular pressure sensor 40 with the rotation input member 21 and inside the housing 24 of the reversing mechanism 20 can be limited, and the friction loss of the annular pressure sensor 40 can be prevented.

In an embodiment, the housing 24 of the reversing mechanism 20 is provided with an inner hole 241 for accommodating the annular pressure sensor 40, and a diameter of an inner circumferential surface of the inner hole 241 is equal to a diameter of an outer circumferential surface 41 of the annular pressure sensor 40.

For example, as shown in FIG. 9, the accommodation hole 122a for accommodating the reversing mechanism 20 is opened in the accommodation portion 122 of the floating caliper body 12, and is also configured to accommodate the annular pressure sensor 40 sleeved on the extension portion 212 of the rotation input member 21. That is, the accommodation hole 122a of the accommodation portion 122 of the floating caliper body 12 is also constructed as the inner hole 241 configured to accommodate the annular pressure sensor 40 in the housing 24 of the reversing mechanism 20. The accommodation hole 122a corresponds to a structure configured to accommodate the annular pressure sensor 40, that is, is constructed as the inner hole 241.

It may be understood that the inner hole 241 is disposed to accommodate the annular pressure sensor 40, providing sealing and protection for the annular pressure sensor 40, to prevent impurities such as external dust and water vapor from eroding a functional structural part of the annular pressure sensor 40, improve detection accuracy of the annular pressure sensor 40, and prolong a service life of the annular pressure sensor 40. In addition, the diameter of the inner circumferential surface of the inner hole 241 is set to be equal to the diameter of the outer circumferential surface 41 of the annular pressure sensor 40, so that the annular pressure sensor 40 can be just embedded in the inner hole 241, to support and position the annular pressure sensor 40 by using the inner hole 241. In this way, displacement of the annular pressure sensor 40 in the radial direction of the rotation input member 21 can be limited, and an adverse phenomenon like tilt of the annular pressure sensor 40 can be avoided, thereby further improving detection accuracy and detection of the annular pressure sensor 40.

That is, supporting and positioning may be formed for the annular pressure sensor 40 by using cooperation between the inner circumferential surface of the inner hole 241 and the outer circumferential surface 41 of the annular pressure sensor 40, so that the annular pressure sensor 40 is in a relatively static posture inside the housing 24 of the reversing mechanism 20, and it is ensured that the annular pressure sensor 40 works reliably.

In an embodiment, there are a plurality of stoppers 26. The plurality of stoppers 26 are arranged at spacings along the circumferential direction of the annular pressure sensor 40.

For example, as shown in FIG. 10, the quantity of the stoppers 26 may be but is not limited to three, and the three stoppers 26 are arranged at spacings along the circumferential direction of the annular pressure sensor 40. It may also be understood that the three stoppers 26 are arranged at spacings along a circumferential direction of the inner hole 241.

In this embodiment, rotation of the annular pressure sensor 40 inside the housing 24 of the reversing mechanism 20 can be further limited by disposing the plurality of stoppers 26. In addition, the plurality of stoppers 26 are arranged at spacings along the circumferential direction of the annular pressure sensor 40, so that in a process in which each stopper 26 limits rotational motion of the annular pressure sensor 40, the plurality of stoppers 26 can evenly apply force to the annular pressure sensor 40, that is, force on the annular pressure sensor 40 is uniform. In this way, structural strength of the annular pressure sensor 40 is improved, and a working life of the annular pressure sensor is prolonged.

It should be noted that, as shown in FIG. 10, only an example in which the quantity of the stoppers 26 is three is used for description. However, that the quantity of the stoppers 26 used to limit rotation of the annular pressure sensor 40 can be only three is not limited in embodiments of this application. In another embodiment of this application, the quantity of the arranged stoppers 26 may be adjusted based on an actual design requirement. This is not specifically limited in embodiments of this application.

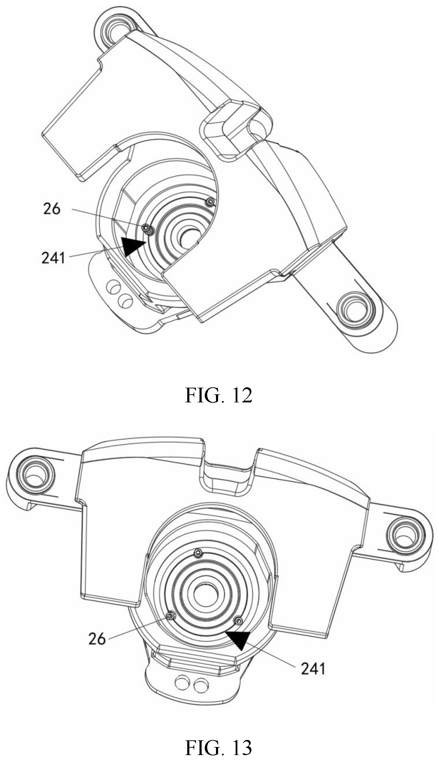

Refer to FIG. 11 to FIG. 14 together with FIG. 10. FIG. 11 is a diagram of an outline structure of the annular pressure sensor 40 of the electro-mechanical brake apparatus 100 according to an embodiment of this application. FIG. 12 is a diagram of an outline obtained after a partial structure of the electro-mechanical brake apparatus 100 is hidden according to an embodiment of this application. FIG. 13 is a diagram of an outline obtained after a partial structure of the electro-mechanical brake apparatus 100 is hidden according to an embodiment of this application. FIG. 14 is a diagram of a cross-sectional structure of the electro-mechanical brake apparatus 100 according to the embodiment shown in FIG. 13 in this application. To clearly show a working process in which the stoppers 26 limit rotation of the annular pressure sensor 40 inside the housing 24 of the reversing mechanism 20, a part of structure of the electro-mechanical brake apparatus 100 in this application is hidden in FIG. 12 to FIG. 14.

In an embodiment, an accommodation groove and a groove that cooperate with each other are disposed between the inner circumferential surface of the inner hole 241 and the outer circumferential surface 41 of the annular pressure sensor 40, and the stopper 26 extends into the accommodation groove and the groove along the displacement direction of the reversing mechanism 20, to achieve an effect of limiting rotation of the annular pressure sensor 40 around the axis of the annular pressure sensor 40.

It should be proposed that the accommodation groove on the inner hole 241 and a groove 411 on the outer circumferential surface 41 of the annular pressure sensor 40 are disposed in a one-to-one correspondence. A shape obtained after the accommodation groove and the groove enclose matches an outline of the stopper 26. The stopper 26 extends into space form through cooperation of the accommodation groove and the groove, to limit rotation of the annular pressure sensor 40 inside the inner hole 241.

For example, as shown in FIG. 10 to FIG. 14, an example in which the groove is opened in the outer circumferential surface 41 of the annular pressure sensor 40 and the accommodation groove is opened in the inner circumferential surface of the inner hole 241 is used for description. Specifically, a plurality of grooves 411 are opened in the outer circumferential surface 41 of the annular pressure sensor 40, and the plurality of grooves 411 are in a one-to-one correspondence with the plurality of stoppers 26. Each groove 411 is configured to cooperate with one stopper 26.

In other words, the plurality of grooves 411 are arranged at spacings along the circumferential direction of the annular pressure sensor 40, and the grooves 411 extend along a radial direction of the annular pressure sensor 40. A quantity of the grooves 411 is the same as the quantity of the stoppers 26. Each stopper 26 extends into one groove 411 along the axial direction of the annular pressure sensor 40 (as shown in FIG. 12 to FIG. 14), so that the stopper 26 can implement a function of limiting the annular pressure sensor 40 to rotate around the axis of the annular pressure sensor 40.

In an embodiment, along the axial direction of the annular pressure sensor 40, a cross-sectional shape of the groove 411 corresponds to a cross-sectional shape of the stopper 26, so that the stopper 26 can extend into the groove 411.

For example, as shown in FIG. 10 to FIG. 14, the stopper 26 is columnar, the groove 411 is a cylindrical groove, and a diameter of the stopper 26 is greater than or equal to an inner diameter of the groove 411.

It may be understood that the diameter of the stopper 26 is set to be greater than or equal to the inner diameter of the groove 411, so that the stopper 26 can form interference fit with the groove 411, to form better positioning for the stopper 26, and then reliably limit rotation of the annular pressure sensor 40 inside the housing 24 of the reversing mechanism 20.

In an embodiment, along the axial direction of the annular pressure sensor 40, a depth H2 of the groove 411 is less than a thickness H1 of the annular pressure sensor 40. The depth H2 of the groove 411 may alternatively be understood as a length of the groove 411, that is, the length of the groove 411 is less than the thickness of the annular pressure sensor 40. To meet a function requirement of the annular pressure sensor 40, the groove 411 of the annular pressure sensor 40 is set as a blind hole, to avoid impact on a function caused by that the stopper 26 passes through the annular pressure sensor 40 along the axial direction.

As shown in FIG. 10 to FIG. 14, the depth H2 of the groove 411 is set to be less than the thickness H1 of the annular pressure sensor 40, so that the groove 411 forms a blind hole effect on the outer circumferential surface 41 of the annular pressure sensor 40, to ensure work performance of the annular pressure sensor 40, and ensure that the annular pressure sensor 40 can normally perform pressure detection. In an embodiment, an inner wall of the inner hole 241 of the housing (namely, the housing 24) of the brake 10 includes a plurality of accommodation grooves, and each accommodation groove is configured to accommodate one stopper 26. Along the axial direction of the annular pressure sensor 40, an opening of each accommodation groove faces the annular pressure sensor 40; and along the circumferential direction of the annular pressure sensor 40, the plurality of accommodation grooves are distributed on the inner wall of the inner hole 241 at spacings. The stopper 26 is embedded into the accommodation groove along the radial direction of the annular pressure sensor 40, so that the housing of the brake 10 limits the circumferential direction of the annular pressure sensor 40.

In an embodiment, the stopper 26 is a cylindrical member, where a width of the cylindrical member is less than or equal to a width of a groove opening of the accommodation groove along the circumferential direction of the annular pressure sensor 40. Interference fit may be formed between the stopper 26 and the accommodation groove, to form better positioning for the stopper 26, and reliably limit rotation of the annular pressure sensor 40 inside the housing (namely, the housing 24) of the brake 10.

In an embodiment, a threaded hole for removing the stopper 26 is disposed on a side that is of the stopper 26 and that faces the reversing mechanism 20, and the threaded hole is disposed at an end of the stopper 26 to facilitate removal of the stopper 26. Along the axial direction of the annular pressure sensor 40, an end that is of each stopper 26 and that faces the friction lining 13 includes a threaded hole, each stopper 26 is partially embedded into an accommodation groove, and the threaded hole is disposed at the end of the stopper 26 to facilitate removal of the stopper 26.

In an embodiment, refer to FIG. 15. FIG. 15 is a diagram of arrangement of an internal structure of the electro-mechanical brake apparatus 100 according to an embodiment of this application. As shown in FIG. 15, the electro-mechanical brake apparatus 100 includes a reducer 50. The reducer 50 is in transmission connection between the brake motor 30 and the reversing mechanism 20, and along the displacement direction of the reversing mechanism 20, the reducer 50 is located on a side that is of the annular pressure sensor 40 and that is away from the reversing mechanism 20. The brake motor 30 rotates by using the reducer 50 to drive the brake 10 to act and brake the wheel 1001, which may also be understood as braking the brake disc 1002.

In other words, the plurality of transmission components include the reducer 50, the reducer 50 includes a plurality of gears, and the plurality of gears are configured for transmission connection between the brake motor 30 and one transmission component. Along the axial direction of the annular pressure sensor 40, the annular pressure sensor 40 and at least one gear are arranged opposite to each other on two sides of the housing (namely, the housing 24) of the brake 10. The annular pressure sensor 40 is disposed at an output end of the reducer 50, and the output end of the reducer 50 may be configured to drive the rotation input member 21 to rotate to implement braking.

Specifically, along the moving direction of the reversing mechanism 20, the brake motor 30 and the brake 10 are located on a same side of the reducer 50, that is, the brake motor 30 is located on a side that is of the reducer 50 and that faces the annular pressure sensor 40. In addition, along the radial direction of the rotation input member 21 of the reversing mechanism 20, the brake motor 30 and the reversing mechanism 20 are disposed side by side.

As shown in FIG. 15, the reducer 50 includes an input shaft 51 and an output shaft 52 that are in transmission connection. The input shaft 51 is coaxially driven with the motor shaft 31 of the brake motor 30, and the output shaft 52 is coaxially driven with the rotation input member 21 of the reversing mechanism 20. The reducer 50 and the reversing mechanism 20 are adjacently arranged and connected to each other, so that a power transmission path from the brake motor 30 to the reversing mechanism 20 can be shortened, transmission efficiency can be improved, and a volume can be reduced.

In an embodiment, along the direction vertical to the displacement direction of the reversing mechanism 20, the input shaft 51 and the output shaft 52 are disposed side by side, and axial directions of the input shaft 51 and the output shaft 52 are both parallel to the displacement direction of the reversing mechanism 20.

In other words, the reducer 50 includes the input shaft 51 and the output shaft 52, where the input shaft 51 and the motor shaft of the brake motor 30 are coaxially driven; along the radial direction of the annular pressure sensor 40, the input shaft 51 and the output shaft 52 are disposed side by side; and along the axial direction of the annular pressure sensor 40, the brake motor 30 and the annular pressure sensor 40 are arranged on the same side of the plurality of gears. The reducer 50 is arranged along an arrangement direction of the brake motor 30 and the rotation input member 21, and is arranged adjacent to the brake motor 30 and the rotation input member 21 at the same time, to shorten a power transmission path from the brake motor 30 to the sliding output member 22, improve transmission efficiency, and reduce a volume.

In an embodiment, the one transmission component may be the output shaft 52. Along the axial direction of the annular pressure sensor 40, the output shaft 52 passes through the annular pressure sensor 40 and the housing (namely, the housing 24) of the brake 10. The annular pressure sensor 40 may be sleeved on an outer side of the output shaft 52 of the reducer 50. The output shaft 52 passes through the annular pressure sensor 40 and the housing (namely, the housing 24) of the brake, and is coaxially driven with the rotation input member 21.

It may be understood that, the input shaft 51 and the output shaft 52 in the reducer 50 are arranged side by side and are in transmission connection, so that reversing transfer of output power of the brake motor 30 can be implemented, and then a length of the electro-mechanical brake apparatus 100 can be shortened. That is, the reducer 50 is arranged along the arrangement direction of the brake motor 30 and the reversing mechanism 20, and is arranged adjacent to the brake motor 30 and the reversing mechanism 20 at the same time, to further shorten the power transmission path from the brake motor 30 to the reversing mechanism 20, improve transmission efficiency, and reduce a volume.

The brake motor 30 as a power source rotates around the axis of the brake motor by using the motor shaft 31 to output power to the outside. The motor shaft 31 of the brake motor 30 and the input shaft 51 of the reducer 50 are coaxially driven, and the motor shaft 31 rotates synchronously to drive the input shaft 51 to rotate, for achieving an effect of inputting power into the reducer 50. Power output by the brake motor 30 is input to the reducer 50 through the input shaft 51, and is output from the reducer 50 through the output shaft 52.

The output shaft 52 is coaxially driven with the rotation input member 21 of the reversing mechanism 20. When the output shaft 52 rotates, the rotation input member 21 of the reversing mechanism 20 is synchronously driven to rotate, to transmit power to the brake 10 through the rotation input member 21 of the reversing mechanism 20, for achieving an effect that the reducer 50 drives the brake 10 to brake the vehicle 1000.

In other words, a transmission path of the power output by the brake motor 30 in the electro-mechanical brake apparatus 100 may be but is not limited to: motor shaft 31 of the brake motor 30->input shaft 51->output shaft 52->rotation input member 21->sliding output member 22->brake 10, so that an effect that the reducer 50 drives the brake 10 for braking can be achieved.

It may be understood that the power output by the brake motor 30 is transmitted to the reducer 50 through the reducer 50, is transmitted to the brake 10 through the reducer 50, and drives the brake 10 to brake, so that the power output by the brake motor 30 is transmitted to the friction lining 13 through a "U"-shaped path, and in other words, a power transmission path of the electro-mechanical brake apparatus 100 forms a folding effect along an axial direction of the wheel 1001, thereby reducing a size of the electro-mechanical brake apparatus 100 along the axial direction of the wheel 1001, and properly utilizing wheel end space of the vehicle 1000.

It should be noted that, in the embodiment shown in FIG. 2, only a possible arrangement manner of functional structure apparatuses in the electro-mechanical brake apparatus 100 in this application is used as an example for description. However, arrangement and a transmission connection manner of the functional structure apparatuses in the electro-mechanical brake apparatus 100 in this application are not limited thereto. In another embodiment of the electro-mechanical brake apparatus 100 in this application, an arrangement manner and a connection manner of the brake motor 30, the reducer 50, and the brake 10 may be adjusted based on an actual design requirement and an application scenario. This is not specifically limited in embodiments of this application.

In addition, as shown in FIG. 1, belt transmission is used to implement transmission connection between the input shaft 51 and the output shaft 52 in the reducer 50. However, FIG. 1 is merely used to describe a possible manner of transmission between the input shaft 51 and the output shaft 52 in embodiments. A manner of transmission between the input shaft 51 and the output shaft 52 is not limited to the belt transmission shown in FIG. 1.

In other words, in another embodiment of this application, the manner of transmission between the input shaft 51 and the output shaft 52 may be but is not limited to gear transmission, chain transmission, belt transmission, or another transmission manner that can implement transmission connection between the input shaft 51 and the output shaft 52.

In an embodiment, along the displacement direction of the reversing mechanism 20, the annular pressure sensor 40 is located between the reversing mechanism 20 and the reducer 50, and the output shaft 52 is in transmission connection to the reversing mechanism 20 through the inner hole of the annular pressure sensor 40. It may be understood that the annular pressure sensor 40 is disposed close to the reducer 50 and the brake motor 30, so that a signal transmission path of the annular pressure sensor 40 can be shortened. This facilitates line arrangement of the electro-mechanical brake apparatus 100 and improves reliability.

It is clear that a person skilled in the art can make various modifications and variations to this application without departing from the scope of this application. This application is intended to cover these modifications and variations of this application provided that they fall within the scope of the claims of this application and their equivalent technologies.

## Claims

1. An electro-mechanical brake apparatus comprising an annular pressure sensor, wherein the electro-mechanical brake apparatus comprises the annular pressure sensor, a brake motor, and a brake, the brake motor is configured to drive the brake to move a friction lining through a plurality of transmission components, the brake comprises a housing and at least one stopper, and the housing is configured to fasten the annular pressure sensor and the at least one stopper, wherein
along an axial direction of the annular pressure sensor, one of the transmission components passes through the annular pressure sensor and the housing; and
along a circumferential direction of the annular pressure sensor, each of the at least one stopper is arranged between the housing and the annular pressure sensor.

2. The electro-mechanical brake apparatus according to claim 1, wherein the one transmission component is spaced apart from an inner circumferential surface of the annular pressure sensor, and each of the at least one stopper is in contact with an outer circumferential surface of the annular pressure sensor.

3. The electro-mechanical brake apparatus according to claim 1, wherein an outer circumferential surface of the annular pressure sensor comprises a plurality of grooves, and each of the grooves is configured to cooperate with one stopper, wherein
along the circumferential direction of the annular pressure sensor, the plurality of grooves are distributed at spacings on the outer circumferential surface of the annular pressure sensor.

4. The electro-mechanical brake apparatus according to claim 3, wherein along the axial direction of the annular pressure sensor, a length of the groove is less than a thickness of the annular pressure sensor.

5. The electro-mechanical brake apparatus according to claim 2, wherein an inner wall of the housing comprises a plurality of accommodation grooves, and each of the accommodation grooves is configured to accommodate one stopper, wherein
along the axial direction of the annular pressure sensor, an opening of each of the accommodation grooves faces the annular pressure sensor; and
along the circumferential direction of the annular pressure sensor, the plurality of accommodation grooves are distributed at spacings on the inner wall of the housing.

6. The electro-mechanical brake apparatus according to claim 5, wherein the stopper is one cylindrical member, wherein
along the circumferential direction of the annular pressure sensor, a width of the one cylindrical member is less than or equal to a width of groove opening of the accommodation groove.

7. The electro-mechanical brake apparatus according to claim 5, wherein along the axial direction of the annular pressure sensor, an end that is of each of the at least one stopper and that faces the friction lining comprises a threaded hole, and each of the at least one stopper is partially embedded into one of the accommodation grooves.

8. The electro-mechanical brake apparatus according to claim 1, wherein the plurality of transmission components comprise a thrust bearing, and the thrust bearing is configured to be fixedly sleeved on the one transmission component, wherein
along the axial direction of the annular pressure sensor, the thrust bearing is arranged on a side that is of the annular pressure sensor and that faces the one transmission component, and the thrust bearing is configured to move toward or away from the annular pressure sensor along with rotation of the one transmission component.

9. The electro-mechanical brake apparatus according to claim 1, wherein the plurality of transmission components comprise a rotation input member and a sliding output member, the rotation input member is coaxially driven with the one transmission component, the rotation input member is configured to drive the sliding output member to move along an axial direction of the rotation input member, and the sliding output member is configured to drive the friction lining to move, wherein
along the axial direction of the annular pressure sensor, the annular pressure sensor and the sliding output member are arranged relative to each other.

10. The electro-mechanical brake apparatus according to claim 9, wherein the rotation input member comprises a screw, the sliding output member comprises a screw nut, a plurality of balls for reducing friction force are further disposed between the screw and the screw nut, the screw is engaged with the screw nut through the balls, and an axis of the annular pressure sensor coincides with an axis of the screw nut or an axis of the screw.

11. The electro-mechanical brake apparatus according to claim 10, wherein the one transmission component is the rotation input member, wherein
along the axial direction of the annular pressure sensor, the rotation input member passes through the annular pressure sensor and the housing.

12. The electro-mechanical brake apparatus according to any one of claims 1 to 11, wherein the plurality of transmission components comprise a reducer, the reducer comprises a plurality of gears, and the plurality of gears are configured for transmission connection between the brake motor and the one transmission component, wherein
along the axial direction of the annular pressure sensor, the annular pressure sensor and at least one gear are arranged opposite to each other on two sides of the housing.

13. The electro-mechanical brake apparatus according to claim 12, wherein the reducer comprises an input shaft and an output shaft, and the input shaft is coaxially driven with a motor shaft of the brake motor, wherein
along a radial direction of the annular pressure sensor, the input shaft and the output shaft are disposed side by side; and
along the axial direction of the annular pressure sensor, the brake motor and the annular pressure sensor are arranged on a same side of the plurality of gears.

14. The electro-mechanical brake apparatus according to claim 13, wherein the one transmission component is the output shaft, wherein
along the axial direction of the annular pressure sensor, the output shaft passes through the annular pressure sensor and the housing.

15. A vehicle, comprising wheels and the electro-mechanical brake apparatus according to any one of claims 1 to 14, wherein an axial direction of an annular pressure sensor in the electro-mechanical brake apparatus is parallel to an axle of the wheel.
